(19) Europäisches Patentamt
European Patent Office
Office européen des brevets

(11) **EP 1 718 855 B1**

(12) **EUROPÄISCHE PATENTSCHRIFT**

(45) Veröffentlichungstag und Bekanntmachung des Hinweises auf die Patenterteilung:
**08.09.2010   Patentblatt 2010/36**

(21) Anmeldenummer: 05701647.9

(22) Anmeldetag: **07.02.2005**

(51) Int Cl.:
*F02D 41/20* *(2006.01)*

(86) Internationale Anmeldenummer:
**PCT/EP2005/050508**

(87) Internationale Veröffentlichungsnummer:
**WO 2005/083251 (09.09.2005 Gazette 2005/36)**

(54) **VERFAHREN UND VORRICHTUNG ZUM ANSTEUERN EINES KAPAZITIVEN STELLGLIEDS**

METHOD AND DEVICE FOR CONTROL OF A CAPACITIVE ACTUATOR

PROCEDE ET DISPOSITIF POUR ACTIONNER UN ORGANE DE REGLAGE CAPACITIF

(84) Benannte Vertragsstaaten:
**DE FR GB IT**

(30) Priorität: **27.02.2004   DE 102004009614**

(43) Veröffentlichungstag der Anmeldung:
**08.11.2006   Patentblatt 2006/45**

(73) Patentinhaber: **Continental Automotive GmbH
30165 Hannover (DE)**

(72) Erfinder: **AUGESKY, Christian, Georg
93055 Regensburg (DE)**

(56) Entgegenhaltungen:
WO-A-01/33061      DE-A1- 10 158 553
US-A- 5 130 598      US-A- 6 031 707

**Beschreibung**

Die Erfindung betrifft ein Verfahren und eine Vorrichtung zum Ansteuern eines piezoelektrischen Stellglieds, insbesondere eines piezoelektrischen Aktors für ein Einspritzventil einer Brennkraftmaschine.

Beim Ansteuern kapazitiver Stellglieder, d. h. beim Auf- und/oder Entladen kapazitiver Stellglieder, werden an die Ansteuerelektronik des Stellglieds erhebliche Anforderungen gestellt. So müssen dabei Spannungen im Bereich von mehreren 100 V und kurzzeitige Ströme zum Laden und Entladen von mehr als 10 A bereitgestellt werden. Die Ansteuerung erfolgt meist in Bruchteilen von Millisekunden. Gleichzeitig sollte während dieser Ansteuerphasen der Strom und die Spannung dem Stellglied kontrolliert zugeführt werden.

Eine Ausführungsform eines kapazitiven Stellglieds stellt ein piezoelektrischer Aktor dar, wie er zur Betätigung eines Einspritzventils Verwendung findet. Ein solches Einspritzventil wird in Brennkraftmaschinen zum Einspritzen von Kraftstoff in einen Brennraum eingesetzt. Hier werden sehr hohe Anforderungen an ein exaktes und reproduzierbares Öffnen und Schließen der Ventile und damit auch an die Ansteuerung des Aktors gestellt. Um zukünftige Abgasemissionsgrenzwerte einhalten zu können, erhöht sich die Anzahl der Kraftstoffeinspritzung pro Verbrennungstakt. Dadurch werden die Einspritzzeiten und somit auch die Ansteuerzeiten für den piezoelektrischen Aktor immer kürzer, was zusätzliche Anforderungen an die Ansteuerelektronik des Aktors stellt.

Bei einer bekannten Schaltungsanordnung (DE 199 44 733 A1) wird ein piezoelektrischer Aktor von einem Ladekondensator über einen Transformator geladen. Hierzu wird ein auf der Primärseite des Transformators angeordneter Ladeschalter mit einem pulsweitenmodulierten Steuersignal angesteuert. Der Lade- und auch der Entladeschalter sind dort als steuerbare Halbleiterschalter ausgeführt. Dem piezoelektrischen Aktor werden zum Laden oder Entladen vorgegebene Energiepakete zugeführt bzw. entnommen.

Werden Energiepakete benötigt, die kleiner als die vorgegebenen Energiepakete sind, so benötigt die bekannte Schaltungsanordnung zur zeitlichen Mittelung der dem piezoelektrischen Aktor zugeführten und wieder entnommenen Energie ein stark wirksames Ausgangsfilter. Weiter werden hier identische Lade-und Entladeströme vorausgesetzt, sofern die Steuerkennlinie des Aktors keine Unstetigkeitsstellen aufweisen soll. WO 0133061 offenbart eine beliebig vorgebbare Steuerkennlinie.

Es ist Aufgabe der Erfindung, ein Verfahren und eine Vorrichtung zum Ansteuern eines kapazitiven Stellglieds zu schaffen, die sich durch eine hohe Auflösung und Reproduzierbarkeit auszeichnen.

Diese Aufgabe wird erfindungsgemäß durch ein Verfahren mit den Merkmalen des Patentanspruchs 1, sowie durch eine Vorrichtung mit den Merkmalen des Patentanspruchs 11 gelöst.

Gemäß dem erfindungsgemäßen Verfahren wird das Stellglied in zumindest drei Schritten mit jeweils einer vorgegebenen Zeitdauer aufgeladen. Während jeder dieser zumindest drei Zeitdauern fließt beim Aufladen des Stellglieds ein Strom in das Stellglied.

Während der ersten Zeitdauer wird eine Amplitude des Stroms von einem vorgegebnen Minimum auf ein vorgegebenes Maximum erhöht. Während der zweiten Zeitdauer wird die Amplitude des Stroms in etwa konstant gehalten. Schließlich wird während der dritten Zeitdauer die Amplitude des Stroms von einem vorgegebenen maximalen Strom auf einen ebenfalls vorgegebenen Endwert reduziert.

Die erfindungsgemäße Vorrichtung weist eine Steuervorrichtung und eine Endstufe auf, wobei die Endstufe über ein Steuersignal der Steuervorrichtung angesteuert wird. Die Steuervorrichtung stellt für eine erste vorgegebene Zeitdauer ein Steuersignal zur Verfügung, das während dieser ersten Zeitdauer von einem vorgegebenen Minimum auf ein vorgegebenes Maximum ansteigt. Für eine zweite vorgegebene Zeitdauer, die auf die erste Zeitdauer folgt, stellt die Steuervorrichtung ein weitestgehend konstantes Steuersignal zur Verfügung. Für eine dritte vorgegebene Zeitdauer stellt die Steuervorrichtung ein Steuersignal zur Verfügung, das sich über die dritte vorgegebene Zeitdauer von dem vorgegebenen Maximum auf einen vorgegebenen Endwert verringert.

Entsprechende Annahmen gelten auch für das Entladen eines Stellglieds. Hierbei wird während der ersten Zeitdauer ebenfalls die maximale Amplitude des Stroms von einem Minimum auf ein Maximum erhöht. Während der zweiten Zeitdauer wird die Amplitude konstant gehalten und während der dritten Zeitdauer wird die Amplitude des Stroms von einem Maximum auf einen ebenfalls vorgegebenen Endwert erniedrigt. Hierbei ist der Entladestrom so gerichtet, dass sich die im Aktor gespeicherte Energie verringert.

Durch die erfindungsgemäße Ansteuerung des Stellglieds wird ein weicher Anfangs- und Endverlauf der dem Stellglied zugeführten elektrischen Ladung erreicht. Da beispielsweise bei einem piezoelektrischen Stellglied die diesem zugeführte Ladung proportional zu dessen Wegänderung und Kraftänderung ist, wird durch eine langsame Änderung der Ladung über der Zeit im Anfangs- und Endverlaufs des Aufladens oder Entladens ein Überschwingen des Stellglieds verhindert. Hierdurch werden störende mechanische oder akustische Effekte reduziert. Eine Steuerung des Lade- oder Entladestroms ist ausschließlich für die Zeitdauer des Ladens oder Entladens erforderlich.

Vorteilhafte Weiterbildungen der Erfindung sind in den Unteransprüchen angegeben.

Dabei ist ein Einstellen der dem Stellglied zugeführten Ladung ohne eine Änderung der gesamten Ladezeitdauer möglich. Hier werden lediglich die Steigungen in der ersten und in der dritten Zeitdauer des Ladens bzw. Entladens verändert. Durch eine Anpassung der Steigung lässt sich die Linearität der Ansteuerung beeinflussen.

Dabei wird die dem Stellglied zugeführte Ladungsmenge durch eine Änderung der zweiten Zeitdauer variiert. Auf diese Weise kann trotz einer Quantisierung, wie sie beispielsweise durch eine getaktete Endstufe hervorgerufen wird, das Stellglied linear gesteuert werden. Die erste und/ oder dritte Zeitdauer bleibt hierbei unverändert, wodurch die Abschaltrampe nur zeitlich verschoben wird und das Abschaltverhalten gleich bleibt.

So lässt sich ein weiter linearer Steuerbereich erzielen. Hierbei sind Änderungen von 10 bis 100 % in Bezug auf die Energie oder 20 bis 100 % in Bezug auf die Zeit möglich. Ein Linearitätsfehler kleiner 0,5 % ist so realisierbar. Unterschiedliche Lade- und Entladeströme haben keinen Einfluss auf die Linearität des Steuerverfahrens.

In einer bevorzugten Ausführungsform hat das der Endstufe zugeführte Steuersignal einen vorbestimmten Ausgangsstrom zur Folge. Das Steuersignal lässt sich durch eine analoge oder eine digitale Schaltung erzeugen. Unabhängig von der Ansteuerung der Endstufe selbst ist so die Form des dem Stellglied zugeführten Stroms einstellbar.

Vorteilhafterweise entspricht die maximale Amplitude des Stroms während der zweiten Zeitdauer und das Maximum der dritten Zeitdauer in etwa dem vorgegebenen Maximum der ersten Zeitdauer.

In einem weiteren bevorzugten Ausführungsbeispiel entspricht die Einhüllende der maximalen Amplituden über die drei vorgegebenen Zeitdauern in etwa der Form eines Trapezes.

In einer weiteren bevorzugten Ausführungsform handelt es sich bei dem Lade- und/ oder Entladestrom um einen intermittierenden Strom, der beispielsweise durch eine getaktete Strom- oder Spannungsquelle zur Verfügung gestellt wird.

Weiter kann der Strom aus einer Folge von Pulsen zusammengesetzt werden, deren maximale Amplitude jeweils auf einem für diese Zeitdauer vorgegebenen Punkt der Hüllkurve liegt.

In bevorzugter Weise eignen sich für diese Pulse Dreieckspulse.

In einer weiteren bevorzugten Ausführungsform des Verfahrens wird das Stellglied nicht lückend angesteuert, d. h. die Amplitude des Stroms steigt nach Erreichen eines vorgegebenen Minimums wieder ohne Pause an.

Die Erfindung wird nachfolgend anhand von Ausführungsbeispielen unter Bezugnahme auf die schematischen Zeichnungen weiter beschrieben. Es zeigen:

Figur 1    ein Ausführungsbeispiel eines Verlaufs des einem Stellglied zugeführten Stroms und der daraus resul- tierenden Ladung des Stellglieds über der Zeit,

Figur 2    ein weiteres Ausführungsbeispiel eines dem Stellglied zugeführten Stromverlaufs,

Figur 3    ein Blockschaltbild einer Vorrichtung zum Ansteuern eines kapazitiven Stellglieds,

Figur 4a   ein erstes Ausführungsbeispiel einer Steuereinheit, und

Figur 4b   ein zweites Ausführungsbeispiel einer Steuereinheit.

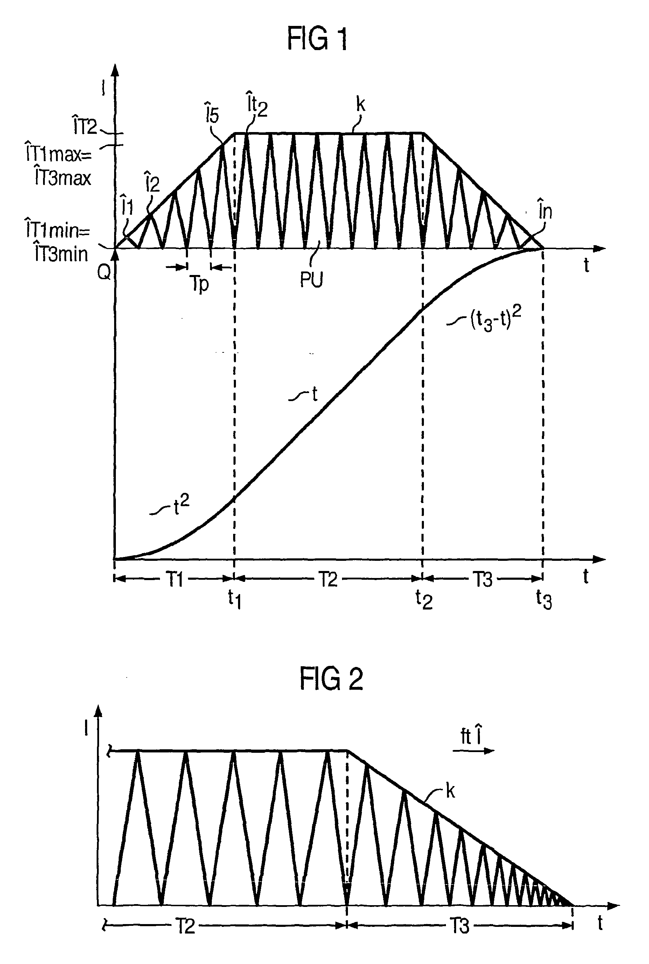

Die Figuren 1 und 2 zeigen den Verlauf eines einem Stellglied zugeführten Stroms I. In Figur 1 ist zusätzlich die durch den Strom I in das Stellglied eingespeicherte Ladungsmenge Q als Funktion der Zeit t aufgetragen.

Bei dem Stellglied handelt es sich hier um ein kapazitives, insbesondere ein piezoelektrisches Stellglied P, wie es zum Betätigen eines Einspritzventils verwendet wird. Solche Einspritzventile finden beispielsweise bei Brennkraftmaschinen Anwendung.

Der obere Teil der Figur 1 zeigt den Verlauf des dem Stellglied zugeführten Stroms I. Hierbei schließen sich dreieckförmige Strompulse PU mit einer Pulsdauer Tp einander an. Die maximalen Amplituden Î1 bis In folgen hierbei einer Steuerkurve k.

Der Verlauf der Steuerkurve k entspricht hier einem Trapez. Während einer ersten Zeitdauer T1 steigen die maximalen Amplituden În des Stroms I von einem vorgegebenen Minimum ÎminT1, hier 0, auf ein vorgegebenes Maximum ÎmaxT1 an. Dieses Maximum ÎmaxT1 wird aufgrund einer gewünschten Ladung Q des Stellglieds P am Ende der Ladephase (T1+T2+T3) aus einem vorgegebenen Kennlinienfeld gewählt. Das Kennlinienfeld kann beispielsweise die Zuordnung verschiedener Parameter der Brennkraftmaschine, wie z.B. Drehzahl und/ oder Last zur benötigten Kraftstoffmenge und somit zur gewünschten Ladung Q enthalten. Dieses Kennlinienfeld kann beispielsweise experimentell oder auch rechnerisch ermittelt werden. Die Wegänderung Δd am Stellglied P entspricht hierbei der dem Stellglied P zugeführten Ladung Q. Für die Ladung Q gilt $Q = \int I(dt)$. Im unteren Teil der Figur 1 ist der zeitliche Verlauf der im Stellglied P eingespeicherten Ladung Q über der Zeit t aufgetragen. Während der ersten Zeitdauer T1 steigt die im Stellglied P gespeicherte Ladungsmenge Q proportional zu $t^2$ an.

Während einer zweiten Zeitdauer T2 bleibt die maximale Amplitude der Strompulse PU konstant. Es folgen hier Strompulse PU mit einer maximalen Amplitude ÎT2 und einer Pulsbreite Tp direkt aufeinander. Hier entspricht ÎT2 in etwa dem maximalen Strom ÎmaxT1 der Zeitdauer T1. Während dieser Zeitdauer T2 steigt die dem Stellglied P zugeführte Ladungsmenge Q proportional mit Zeit t an.

Im letzten Abschnitt T3 reduziert sich die Amplitude În der Strompulse PU von einem vorgegebenen Maximum ÎmaxT3 bis auf einen ebenfalls vorgegebenen Endwert ÎminT3, hier 0. Hier entspricht ÎmaxT3 in etwa der maximalen Amplitude ÎmaxT1, die in der Zeitdauer T1 auftritt. Die dem Stellglied P zugeführte Ladungsmenge Q verhält sich während dieser Zeitdauer T3 propor-

tional zu $(t_3-t)^2$.

Die Zeitdauern T1 und T3 werden hier so gewählt, dass hinreichend viele Pulse PU in T1 oder T3 vorhanden sind. Dementsprechend wird eine Schaltfrequenz $fp = \dfrac{1}{2Tp}$ gewählt.

Vorzugsweise sollten etwa 5 bis 10 Pulse innerhalb der ansteigenden bzw. abfallenden Flanke der Kurve verlaufen. Dementsprechend muss die Schaltfrequenz ft einer das Stellglied ansteuernden Endstufe E ausgewählt werden. Durch die geeignete Wahl der Pulsbreite Tp wird eine ausreichende Mittelung der durch die Pulsbreite Tp hervorgerufenen Quantisierung ermöglicht und die Ladungsmenge über der gesamten Ladezeit T1+T2+T3 linear gesteuert.

Die Pulsbreite Tp kann während der Zeitdauer T1, T2 und T3 des Ansteuern konstant bleiben.

Um eine lineare Steuerung der Wegänderung Δd am Stellglied P zu Erreichen, wird die dem Stellglied zugeführte Ladungsmenge hauptsächlich durch eine Änderung der zweiten Zeitdauer T2 erreicht. Hierbei wird die abfallende Rampe, die die Hüllkurve der Amplituden Î während der dritten Zeitdauer T3 bildet, zeitlich verschoben, die dritte Zeitdauer T3 bleibt unverändert.

Eine alternative Ausführungsform des das Stellglied P ansteuernden Stroms I ist in Figur 2 dargestellt. Hier wird die Pulsbreite Tp während der Zeitdauer T3 reduziert und somit die Schaltfrequenz ft erhöht.

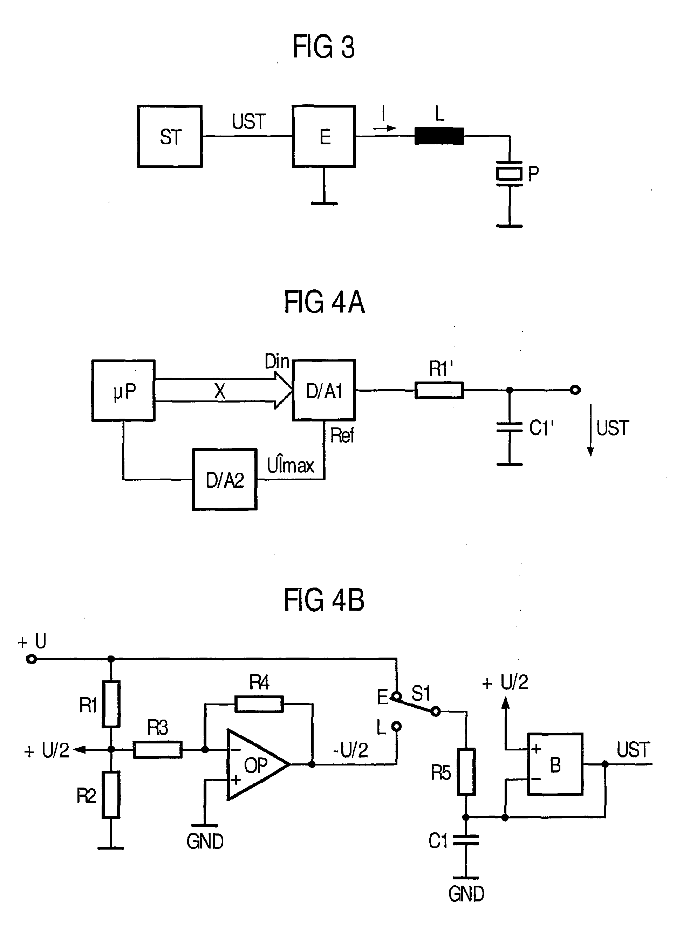

Figur 3 zeigt ein Blockschaltbild eines Ausführungsbeispiels einer Vorrichtung zum Ansteuern eines Stellglieds. Das Stellglied, hier ein piezoelektrisches Stellglied P, ist über eine Induktivität L mit einer Endstufe E verbunden. Die Endstufe E liefert einen das piezoelektrische Stellglied über die Induktivität L aufladenden Strom I. Die Endstufe E kann als herkömmlicher Schaltwandler, beispielsweise als Buck-Boost-, als Flyback-, oder als SEPIC-Konverter ausgeführt sein. Die Endstufe E liefert abhängig von einer Steuerspannung UST, die von einer Steuereinheit ST bereitgestellt wird, den das piezoelektrische Stellglied P auf- oder entladenden Strom I. Die in Figur 3 eingezeichnete Richtung des Stroms I zeigt die Stromrichtung bei einem Ladevorgang.

Figur 4a zeigt ein erstes Ausführungsbeispiel einer Steuereinheit ST. Diese weist einen Digital-Analog-Wandler, vorzugsweise einen schnellen multiplizierenden Digital-Analog-Wandler D/A1 mit einem nachgeschalteten Tiefpassfilter R1', C1 auf. Dem Digital-Analog-Wandler D/A1 wird an einem Digitaleingang Din einen Vorgabewert X zugeführt und an einem weiteren Eingang Ref eine die maximale Amplitude Imax des Stroms I vorgebende Steuerspannung UÎmax. Die angelegte Steuerpannung uÎmax wird dann mit dem eingestellten Digitalwert X multipliziert und am Ausgang als Steuerspannung UST ausgegeben, so dass der Digital-Analog-Wandler wie ein genaues digitales Potentiometer arbeitet. Sowohl der Vorgabewert X, als auch die maximale Amplitude werden von einem Mikrocontroller μC bereitgestellt. Hierbei wird die Steuerspannung UÎmax aus der digitalen Information des Mikrocontrollers μC durch einen zweiten Digital-Analog-Wandler D/A2 erzeugt. Über das aus dem Widerstand R1' und dem Kondensator C1' gebildete Tiefpassfilter wird das so erzeugte Steuersignal UST der Endstufe E zugeführt. So kann die Hüllkurve k vorgegeben werden, ohne dass die zeitliche Ansteuerung des Aktors P durch die Endstufe verändert wird.

Figur 4b zeigt ein Ausführungsbeispiel einer aus analogen Bauelementen aufgebauten Schaltungsanordnung zum Erzeugen des Steuersignals UST. Die dort gezeigte Schaltungsanordnung weist einen einerseits mit Masse GND verbundenen Ladekondensator C1 auf, der andererseits über einen Spannungsbegrenzer B mit dem Ausgang UST der Schaltungsanordnung verbunden ist.

Der Spannungsbegrenzer B ist am nicht invertierenden Eingang + mit einer der zu begrenzenden Spannung entsprechenden Spannung U/2 verbunden. Der invertierende Eingang - ist mit der Masse abgewandten Seite des Kondensators C1 verbunden. Der Ausgang UST des Spannungsbegrenzers B ist ebenfalls mit diesem Anschluss des Kondensators C1 elektrisch verbunden. Der Kondensator C1 ist weiter über einen Widerstand R5 und einen Auswahlschalter S1 (bei Schalterstellung Entladen "E") mit der Versorgungsspannung U elektrisch verbunden. In einer zweiten Schalterstellung Laden "L" des Schalters S1 ist der Kondensator C1 über den Widerstand R5 mit dem Ausgang eines als invertierenden Spannungsverstärkers geschalteten Operationsverstärkers OP verbunden. Der Operationsverstärker OP ist mit seinem nicht invertierenden Eingang + mit Masse GND und mit seinem invertierenden Eingang - über einen Widerstand R3 mit der hier durch einen Spannungsteiler R1, R2 (R1=R2) halbierten Versorgungsspannung U verbunden. Der Ausgang des Operationsverstärkers OP ist über einen weiteren Widerstand R4 auf seinen invertierenden Eingang rückgekoppelt.

Hier wird die Rampe des Steuersignals UST dadurch erzeugt, dass der Kondensator C1 in der Schalterstellung L geladen und anschließend in Schalterstellung E entladen wird. Durch den Strombegrenzer B wird erreicht, dass die Entladespannung des Kondensators C1 so begrenzt wird, dass die Steuersignal UST sich im linearen Bereich der Entladespannung des Kondensators C1 befindet. Anstelle des RC-Glieds R5, C1 kann jedoch auch ein idealer Integrator verwendet werden.

**Patentansprüche**

1.  Verfahren zum Ansteuern eines piezoelektrischen Stellglieds, das die folgenden Schritte aufweist:

    - das Stellglied wird in zumindest drei Schritten mit jeweils einer vorgegebenen Zeitdauer (T1, T2, T3) durch einen Strom (I) auf- oder entladen, der aus einer Folge von Pulsen (PU) zusammengesetzt wird, wobei die maximale Amplitude (Î) jeweils dem maximalen Strom des jeweiligen Pulses (PU) entspricht,

- während der ersten Zeitdauer (T1) wird die maximale Amplitude (În) der Strompulse (PU) von einem vorgegebenen Minimum (ÎminT1) auf ein vorgegebenes erstes Maximum (ÎmaxT1) erhöht,

- während der zweiten Zeitdauer (T2) wird die maximale Amplitude (În) der Strompulse (PU) in etwa konstant gehalten, und

- während der dritten Zeitdauer (T3) wird die maximale Amplitude (În) der Strompulse (PU) von einem weiteren vorgegebenen Maximum (ÎmaxT3) auf ein weiteres vorgegebenes Minimum (ÎminT3) erniedrigt,

- wobei der Strom (I) von einer Endstufe (E) in Abhängigkeit von einem Steuersignal (UST) bereitgestellt wird, und

- wobei das Steuersignal (UST) von einem Digital-Analog-Wandler (D/A1) in Abhängigkeit von einem Vorgabewert (X) bereitgestellt wird, **dadurch gekennzeichnet,**

- **dass** die zweite Zeitdauer (T2) entsprechend einer dem Stellglied (p) zuzuführenden Ladungsmenge (Q) gewählt wird, die in Abhängigkeit von einer vorgegebenen Längenänderung (Δd) aus einem Kennlinienfeld ausgelesen wird.

2. Verfahren nach Anspruch 1, **dadurch gekennzeichnet, dass** das erste Maximum (ÎmaxT1) entsprechend einer dem Stellglied (p) zuzuführenden Ladungsmenge (Q) gewählt wird.

3. Verfahren nach Anspruch 2, **dadurch gekennzeichnet, dass** das erste Maximum (ÎmaxT1) in Abhängigkeit von einer vorgegebenen Längenänderung (Δd) aus einem Kennlinienfeld ausgelesen wird.

4. Verfahren nach einem der vorhergehenden Ansprüche, **dadurch gekennzeichnet, dass** die maximalen Amplituden (În) auf einer Hüllkurve (k) liegen, die über die drei vorgegebenen Zeitdauern (T1, T2, T3) in etwa die Form eines Trapezes aufweist.

5. Verfahren nach einem der vorhergehenden Ansprüche, **dadurch gekennzeichnet, dass** die Pulse (PU) die Form eines Dreiecks aufweisen.

6. Verfahren nach einem der vorhergehenden Ansprüche, **dadurch gekennzeichnet, dass** die Amplituden (În) des Stroms (I) nach Erreichen eines vorgegebenen Minimums ohne Pause ansteigen.

7. Vorrichtung zum Ansteuern eines piezoelektrischen Stellglieds, die aufweist:

- eine als Schaltwandler ausgebildete Endstufe (E), die einen Steuereingang (UST) aufweist, und

- eine Steuervorrichtung (ST), die ein Steuersignal (UST) zum Betreiben der Endstufe (E) bereitstellt, wobei das Steuersignal (UST) während einer ersten vorgegebenen Zeitdauer (T1) von einem vorgegebenen Minimum (ÎminT1) auf ein vorgegebenes Maximum (ÎmaxT1) ansteigt, während einer zweiten vorgegebenen Zeitdauer (T2) konstant bleibt und während einer dritten vorgegebenen Zeitdauer (T3) von einem vorgegebenen Maximum (ÎmaxT3) auf einen vorgegebenen Endwert (ÎminT3) abfällt und die Hüllkurve (k) von im Schaltwandler (E) erzeugten Strompulsen (PU) bildet, und einen Digital-Analog-Wandler (D/A1) aufweist, der an seinem Ausgang in Abhängigkeit von einem Vorgabewert (X) das Steuersignal (UST) bereitstellt, **dadurch gekennzeichnet,**

- **dass** die zweite Zeitdauer (T2) entsprechend einer dem Stellglied (p) zuzuführenden Ladungsmenge (Q) gewählt wird, die in Abhängigkeit von einer vorgegebenen Längenänderung (Δd) aus einem Kennlinienfeld ausgelesen wird.

8. Vorrichtung nach Anspruch 7, **dadurch gekennzeichnet, dass** der Digital-Analog-Wandler (D/A1) eingangsseitig mit einem Mikrocontroller (μC) verbunden ist, wobei der Mikrocontroller (μC) dem Digital-Analog-Wandler (D/A1) an einem Digital-Eingang (DÎn) den Vorgabewert (X) zuführt und an einem weiteren Eingang (REF) eine Steuerspannung (UÎmax) zuführt, die der maximalen Amplitude (Îmax) des Stroms (I) entspricht.

**Claims**

1. Method for controlling a piezoelectric actuator, featuring the following steps:

- the actuator is charged or discharged in at least three stages, each with a predefined duration (T1, T2, T3) by a current (I), which is composed of a sequence of pulses (PU), with the maximum amplitude (Î) corresponding in each instance to the maximum current of the respective pulse (PU)

- during the first period (T1) the maximum amplitude (În) of the current pulses (PU) is increased from a predefined minimum (ÎminT1) to a predefined first maximum (ÎmaxT1),

- during the second period (T2) the maximum amplitude (În) of the current pulses (PU) is kept approximately constant, and

- during the third period (T3) the maximum amplitude (În) of the current pulses (PU) is lowered from a further predefined maximum (ÎmaxT3) to a further predefined minimum (ÎminT3),
- with the current (I) being provided by an end stage (E) as a function of a control signal (UST), and
- with the control signal (UST) being provided by a digital-analogue converter (D/A1) as a function of a default value (X),
**characterised in that**
- the second period (T2) is selected according to an amount of charge (Q) to be fed to the actuator (p), said amount of charge being read out depending on a predefined length change (∆d) from a characteristic data field.

2. Method according to claim 1, **characterised in that** the first maximum (ÎmaxT1) is selected in accordance with an amount of charge (Q) to be fed to the actuator (p).

3. Method according to claim 2, **characterised in that** the first maximum (ÎmaxT1) is read out depending on a predefined length change (∆d) from a characteristic data field.

4. Method according to one of the previous claims, **characterised in that** the maximum amplitudes (În) lie on an envelope curve (k) which, over the three predefined periods (T1, T2, T3) has approximately the shape of a trapeze.

5. Method according to one of the previous claims, **characterised in that** the pulses (PU) are triangular in shape.

6. Method according to one of the preceding claims, **characterised in that** the amplitudes (În) of the current (I) increase without pausing after a predefined minimum has been reached.

7. Device for controlling a piezoelectric actuator, which features:

- a final stage (E), which features a control input (UST), and is embodied as a switching converter, and
- a control unit (ST), which provides a control signal (UST) to operate the final stage (E), with the control signal (UST) rising during a first predefined period (T1) from a predefined minimum (ÎminT1) to a predefined maximum (ÎmaxT1), remaining constant during a second predefined period (T2) and falling during a third predefined period (T3) from a predefined maximum (ÎmaxT3) to a predefined final value (ÎminT3) and the envelope curve (k) forming from current pulses (PU) generated in the switching converter (E), and having a digital-analogue converter (D/A1), which provides the control signal (UST) at its output as a function of a default value (X)
**characterised in that**
- the second period (T2) is selected according to an amount of charge (Q) to be fed to the actuator (p), said amount of charge being read out depending on a predefined length change (∆d) from a characteristic data field.

8. Device according to claim 7, **characterised in that** the digital-analogue converter (DA1) is connected on the input side to a microcontroller (μC), with the microcontroller (μC) feeding the default value (X) to the digital-analogue converter (D/A1) at a digital input (DÎn) and feeding a control voltage (UÎmax) to a further input (REF), which corresponds to the maximum amplitude (Îmax) of the current (I).

**Revendications**

1. Procédé pour commander un organe de commande, plus particulièrement un actionneur piézoélectrique, qui présente les étapes suivantes :

- l'actionneur est chargé ou déchargé en au moins trois étapes, respectivement, avec une période de temps prédéfinie (T1, T2, T3) par un courant (I), qui est composé d'une série d'impulsions (PU), l'amplitude maximale (Î) correspondant respectivement au courant maximal de l'impulsion respective (PU),
- pendant la première période de temps (T1), l'amplitude maximale (În) des impulsions de courant (PU) est élevée d'un minimum prédéfini (ÎminT1) à un premier maximum prédéfini (ÎmaxT1),
- pendant la deuxième période de temps (T2), l'amplitude maximale (În) des impulsions de courant (PU) est maintenue à peu près constante, et
- pendant la troisième période de temps (T3), l'amplitude maximale (În) des impulsions de courant (PU) est abaissée d'un autre maximum prédéfini (ÎmaxT3) à un autre minimum prédéfini (ÎminT3),
- dans lequel le courant (I) d'un étage de sortie (E) est délivré en fonction d'un signal de commande (UST), et
- le signal de commande (UST) d'un convertisseur numérique/analogique (D/A1) est délivré en fonction d'une valeur allouée (X), **caractérisé en ce que**
- la deuxième période de temps (T2) est choisie en fonction d'une quantité de charge (Q) à appliquer à l'actionneur (p), laquelle est sélectionnée dans un réseau de caractéristiques en fonction d'une variation de longueur prédéfinie (∆d).

**2.** Procédé selon la revendication 1, **caractérisé en ce que** le premier maximum (ÎmaxT1) est choisi en fonction d'une quantité de charge (Q) à appliquer à l'actionneur (p).

**3.** Procédé selon la revendication 2, **caractérisé en ce que** le premier maximum (ÎmaxT1) est sélectionné dans un réseau de caractéristiques en fonction d'une variation de longueur prédéfinie (Δd).

**4.** Procédé selon l'une quelconque des revendications précédentes, **caractérisé en ce que** les amplitudes maximales (În) se situent dans une enveloppante (k) qui se présente au cours des trois périodes de temps prédéfinies (T1, T2, T3) plus ou moins sous la forme d'un trapèze.

**5.** Procédé selon l'une quelconque des revendications précédentes, **caractérisé en ce que** les impulsions (PU) présentent la forme d'un triangle.

**6.** Procédé selon l'une quelconque des revendications précédentes, **caractérisé en ce que** les amplitudes (În) du courant (I) augmentent sans pause après avoir atteint un minimum prédéfini.

**7.** Dispositif pour commander un organe de commande, plus particulièrement un actionneur piézoélectrique, qui présente :

- un étage de sortie (E) se présentant sous la forme d'un convertisseur de couplage qui présente une entrée de commande (UST), et
- un dispositif de commande (ST), qui applique un signal de commande (UST) pour faire fonctionner l'étage de sortie (E), dans lequel le signal de commande (UST) s'élève pendant une première période de temps prédéfinie (T1) d'un minimum prédéfini (ÎminT1) à un maximum prédéfini (ÎmaxT1), reste constant pendant une deuxième période de temps prédéfinie (T2) et descend pendant une troisième période de temps prédéfinie (T3) d'un maximum prédéfini (ÎmaxT3) à une valeur finale prédéfinie (ÎminT3) et forme l'enveloppante (k) à partir des impulsions de courant (PU) générées dans le convertisseur de couplage (E), et présente un convertisseur numérique/analogique (D/A1), qui applique le signal de commande (UST) à sa sortie en fonction d'une valeur allouée (X), **caractérisé en ce que**
- la deuxième période de temps (T2) est choisie en fonction d'une quantité de charge (Q) à appliquer à l'actionneur (p), laquelle est sélectonnée dans un réseau de caractéristiques en fonction d'une variation de longueur prédéfinie (Δd).

**8.** Dispositif selon la revendication 7, **caractérisé en**

ce que le convertisseur numérique/analogique (D/A1) est connecté côté entrée à un microcontrôleur (μC), dans lequel le microcontrôleur (μC) applique la valeur allouée (X) au convertisseur numérique/ analogique (D/A1) à une entrée numérique (DÎn) et applique à une autre entrée (REF) une tension de commande (UÎmax) qui correspond à l'amplitude maximale (Îmax) du courant (I).

## FIG 1

## FIG 2

## FIG 3

## FIG 4A

## FIG 4B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19944733 A1
- WO 0133061 A